# EUROPÄISCHE PATENTSCHRIFT

(11) **EP 2 028 350 B1**
(45) Veröffentlichungstag und Bekanntmachung des Hinweises auf die Patenterteilung: **20.06.2018**
(21) Anmeldenummer: 08162155.9
(22) Anmeldetag: 11.08.2008
(51) Int. Cl.: F01N 3/20, F01N 3/08, F01N 3/029, F01N 3/025, F01N 9/00, F01N 3/10, F01N 13/00

(54) **Brennkraftmaschinensystem**
Combustion engine system
Système de moteur à combustion interne

(30) Priorität: 18.08.2007 DE 102007039081
(43) Veröffentlichungstag der Anmeldung: 25.02.2009
(73) Patentinhaber: Eberspächer Climate Control Systems GmbH & Co. KG, 73730 Esslingen (DE)
(72) Erfinder: Kaupert, Andreas, 73730, Esslingen (DE)
(74) Vertreter: BRP Renaud & Partner mbB Rechtsanwälte Patentanwälte Steuerberater

(56) Entgegenhaltungen:
- EP-A2- 1 421 987
- EP-A2- 1 785 608
- WO-A1-2004/108256
- WO-A1-2005/024195
- WO-A2-2004/071646
- DE-A1- 10 232 737
- DE-A1- 19 939 807
- US-A1- 2003 163 988

## Beschreibung

Die vorliegende Erfindung betrifft ein Brennkraftmaschinensystem, insbesondere in einem Kraftfahrzeug, mit den Merkmalen des Oberbegriffs des Anspruchs 1.

Ein gattungsgemäßes Brennkraftmaschinensystem ist aus der US 2003/163988 A1 bekannt.

Ein derartiges Brennkraftmaschinensystem umfasst üblicherweise eine Brennkraftmaschine, in der Regel ein Kolbenmotor oder ein Wankelmotor, die mit einem Kraftstoff, wie z.B. Diesel, Benzin, Erdgas oder ein beliebiger anderer Kohlenwasserstoff, betreibbar ist und die zum Generieren von Antriebsleistung dient. Das System umfasst ferner eine mit der Brennkraftmaschine verbundene Abgasleitung zum Abführen von in deren Betrieb entstehenden Motorabgasen.

Zur Abgasreinigung kann in der Abgasleitung u.a. zumindest eine Abgasbehandlungseinrichtung angeordnet sein. Zum Beispiel kann als Abgasbehandlungseinrichtung ein Stickoxid- bzw. NOX-Speicher in der Abgasleitung angeordnet sein, der in dem Motorabgas enthaltenes NOX entzieht und einlagert bzw. speichert. Der NOX-Speicher arbeitet dabei chemisch, d.h., er speichert oder bindet das NOX chemisch. Zum Starten benötigte der NOX-Speicher eine Mindesttemperatur, die er zum Einhalten niedriger Emissionswerte, insbesondere bei einem Kaltstart der Brennkraftmaschine, möglichst rasche erreichen muss. Üblicherweise handelt es sich beim NOX-Speicher um einen NOX-Speicherkatalystor. Die Speicherfähigkeit eines derartigen NOX-Speichers ist begrenzt, so dass der NOX-Speicher regelmäßig bzw. in Abhängigkeit seines Beladungszustands regeneriert werden muss. Zur Regeneration des NOX-Speichers ist es grundsätzlich möglich, mit Hilfe einer entsprechenden Motorsteuerung die Brennkraftmaschine, die im Normalbetrieb überstöchiometrisch betrieben wird, vorübergehend unterstöchiometrisch, also mit einer Luftzahl von kleiner als 1 zu betreiben. In diesem unterstöchiometrischen Betrieb enthält das Motorabgas einen relativ hohen Anteil unverbrannten Kraftstoffs, also unverbrannter Kohlenwasserstoffe. Die Kohlenwasserstoffe reagieren im NOX-Speicher mit dem dort gebundenen NOX. Dabei werden die Kohlenwasserstoffe und NOX zu Kohlendioxid, Wasser und Stickstoff umgesetzt, wodurch sich die Beladung des NOX-Speichers mit NOX reduziert.

Ein Brennkraftmaschinensystem, das mit einem NOX-Speicher arbeitet, ist beispielsweise aus der EP 1 421 987 A2 bekannt.

Der für die Regeneration des NOX-Speichers erforderliche, relativ stark unterstöchiometrische Betrieb der Brennkraftmaschine kann sich nachteilig auf die Laufruhe der Brennkraftmaschine auswirken. Außerdem muss der NOX-Speicher eine bestimmte Mindesttemperatur aufweisen, um die Regeneration mit den relativ langkettigen und somit vergleichsweise reaktionsträgen Kohlenwasserstoffen realisieren zu können.

Alternativ oder zusätzlich kann eine Abgasanlage mit einer als Partikelfilter, insbesondere Rußfilter, ausgestalteten Abgasbehandlungseinrichtung ausgestattet sein. Das Partikelfilter filtert im Betrieb der Brennkraftmaschine Partikel, vorwiegend Rußpartikel, aus dem Motorabgas aus. Mit zunehmender Partikelbeladung steigt der Durchströmungswiderstand des Partikelfilters, so dass auch ein derartiges Partikelfilter regeneriert werden muss. Für die Regeneration des Partikelfilters wird dessen Temperatur auf eine Entzündungstemperatur erhöht, bei der sich die Partikelbeladung entzündet und abbrennt. Zur Temperatursteigerung ist es z.B. möglich, einem stromauf angeordneten Oxidationskatalysator unverbrannten Kraftstoff, z.B. durch eine entsprechende separate Kraftstoffeinspritzanlage, zuzuführen. Die dann im Oxidationskatalysator ablaufende Reaktion erzeugt Wärme, die über die Motorabgase in das Partikelfilter gelangt.

Alternativ oder zusätzlich kann die Abgasanlage eine als Oxidationskatalysator ausgestaltete Abgasbehandlungseinrichtung aufweisen. Der Oxidationskatalysator dient dazu, in den Motorabgasen enthaltene unverbrannte Kohlenwasserstoffe und Kohlenmonoxid umzusetzen, um so die Schadstoffemission der Brennkraftmaschine zu reduzieren. Um die gewünschte Oxidationswirkung entfalten zu können, muss der Oxidationskatalysator seine Betriebstemperatur aufweisen. Bei einem Kaltstart der Brennkraftmaschine kann es relativ lange dauern, bis der Oxidationskatalysator seine Betriebstemperatur erreicht, die z.B. bei etwa 250°C bis 300°C liegt. Bis dahin können unverbrannte Kohlenwasserstoffe den Oxidationskatalysator nahezu ungehindert durchströmen, was die Emissionswerte der Brennkraftmaschine während dieser Startphase erheblich verschlechtert. Abhilfe können hier elektrische Heizeinrichtungen schaffen, mit denen der Oxidationskatalysator schneller auf seine Betriebstemperatur gebracht werden kann.

Alternativ oder zusätzlich kann die Abgasanlage eine als SCR-Katalysator ausgestaltete Abgasbehandlungseinrichtung aufweisen. Der SCR-Katalysator dient dazu, in den Motorabgasen enthaltene Stickoxide durch selektive katalytische Reduktion mit Ammoniak zu Wasser und Stickstoff umzusetzen. Um die gewünschte Reduktionsreaktion durchführen zu können, benötigt auch der SCR-Katalysator eine bestimmte Betriebstemperatur, die sich bei einem Kaltstart der Brennkraftmaschine erst aufbauen muss.

Die ohne Beschränkung der Allgemeinheit exemplarisch genannten Abgasbehandlungseinrichtungen haben gemeinsam, dass sie zum Starten und/oder zum Normalbetrieb und/oder zum Regenerieren eine Mindesttemperatur aufweisen müssen, um ordnungsgemäß arbeiten zu können.

Aus der WO 2005/024195 A1 ist ein Brennkraftmaschinensystem bekannt, bei dem ein SCR-Katalysator vorgesehen ist, dem ein Bypass zugeordnet ist, der bedarfsabhängig eine abgasseitige Umgehung des SCR-Katalysators ermöglicht.

Die vorliegende Erfindung beschäftigt sich mit dem Problem, für ein Brennkraftmaschinensystem der eingangs genannten Art eine verbesserte oder zumindest eine andere Ausführungsform anzugeben, die sich insbesondere dadurch auszeichnet, dass die für die jeweilige Abgasbehandlungseinrichtung benötigte Mindesttemperatur vergleichsweise rasch einstellbar ist. Bevorzugt soll eine Regeneration eines NOX-Speichers ermöglicht werden, ohne dass dabei die Brennkraftmaschine stark unterstöchiometrisch betrieben werden muss und/oder ohne dass hierzu der NOX-Speicher eine relativ hohe Temperatur aufweisen muss. Insbesondere soll preiswert eine Regeneration eines Partikelfilters ermöglicht werden, ohne dass hierzu die Brennkraftmaschine stark unterstöchiometrisch betrieben werden muss. Insbesondere soll während eines Kaltstarts der Brennkraftmaschine ein Oxidationskatalysator und/oder ein SCR-Katalysator rasch auf die jeweilige Betriebstemperatur gebracht werden können.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, Wasserstoffgas an geeigneter Stelle in die Abgasleitung einzulei ten und dass so gebildete Gemisch zu zünden, um so die jeweilige Abgasbehandlungseinrichtung möglichst rasch auf die zum Starten, zum Normalbetrieb oder zum Regenerieren benötigte Mindesttemperatur aufzuheizen. Insbesondere kann so die Regeneration bzw. Aufheizung eines NOX-Speichers erreicht werden. Optional kann außerdem die Regeneration bzw. Aufheizung eines Partikelfilters und/oder die Aufheizung eines Oxidationskatalysators und/oder eines SCR-Katalysators erzielt werden.

Die Regeneration des NOX-Speichers kann mit Hilfe von Wasserstoffgas realisiert werden, das für den Regenerationsbetrieb stromauf des NOX-Speichers in die Abgasleitung eingeleitet wird. Der Wasserstoff dieses Wasserstoffgases besitzt eine deutlich höhere Reaktivität als Kohlenwasserstoffe, wodurch die Regeneration des NOX-Speichers bereits bei relativ niedrigen Temperaturen gestartet werden kann. Außerdem kann das Wasserstoffgas in Abhängigkeit seiner Herstellung bereits eine relativ hohe Temperatur aufweisen, was die Erwärmung des NOX-Speichers beschleunigt. Durch Zünden des Gemisches in der Abgasleitung kann die Abgastemperatur stark erhöht werden, was ebenfalls zur Aufheizung des NOX-Speichers und zur Aktivierung der Regeneration nutzbar ist. Der Wasserstoff setzt das gespeicherte NOX in Wasser und Stickstoff um, ohne dass dabei Kohlendioxid entsteht. Insoweit wird durch die Erfindung eine Verbesserung der Emissionswerte erreicht. Da außerdem für die Regeneration des NOX-Speichers keine Kohlenwasserstoffe mehr benötigt werden, kann die Brennkraftmaschine stöchiometrisch betrieben werden, ebenso ist ein leicht unterstöchiometrischer Betrieb möglich. Ein überstöchiometrischer Betrieb der Brennkraftmaschine, also ein Betrieb mit Luftüberschuss, ist zu vermeiden, da sonst der eingeleitete Wasserstoff nicht mit dem NOX, sondern mit dem Sauerstoff der Luft reagiert.

Die Regeneration des Partikelfilters kann mit Hilfe von Wasserstoffgas realisiert werden, das für den Regenerationsbetrieb stromauf des Partikelfilters in die Abgasleitung eingeleitet wird. Je nach Temperatur kann das Wasserstoffgas bei überstöchiometrischem Motorbetrieb verbrennen und dadurch die zum Starten der Partikelfilterregeneration erforderliche Wärme erzeugen. Außerdem kann das Wasserstoffgas in Abhängigkeit seiner Herstellung bereits eine relativ hohe Temperatur aufweisen, was die Aufheizung des Partikelfilters beschleunigt. Auch hier kann die Zündung des Gemischs die Aufheizung des Partikelfilters zusätzlich beschleunigen.

Die Aufheizung des Oxidationskatalysators und/oder des SCR-Katalysators kann mit Hilfe von Wasserstoffgas realisiert werden, das für den Aufheizbetrieb stromauf des Oxidationskatalysators in die Abgasleitung eingeleitet wird. Die gegenüber Kohlenwasserstoffen deutlich erhöhte Reaktivität des Wasserstoffs ermöglicht eine exotherme Verbrennungsreaktion im Oxidationskatalysator bereits bei stark reduzierten Temperaturen. Gleichzeitig wird dadurch der Oxidationskatalysator rasch erwärmt. Außerdem kann das Wasserstoffgas in Abhängigkeit seiner Herstellung bereits eine relativ hohe Temperatur aufweisen, was die Erwärmung des Oxidationskatalysators beschleunigt. Die Zuführung des Wasserstoffgases stromauf des Oxidationskatalysators kann auch zum Einleiten der Partikelfilterregeneration, also zum Aufheizen des Partikelfilters genutzt werden. Auch hier wirkt sich die Zündung des Gemischs stark beschleunigend für die Aufheizung des Oxidationskatalysators aus.

Bei der Erfindung wird der Wasserstoff in Form eines Wasserstoffgas enthaltenden Reformatgases bereit gestellt, das mit Hilfe eines Reformers aus einem Wasserstoff enthaltenden Brennstoff und einem Sauerstoff enthaltenden Oxidator generiert wird. Als Oxidator dient Beispielsweise Luft. Zum Einleiten dieses Reformatgases in die Abgasleitung stromauf des NOX-Speichers bzw. stromauf des Partikelfilters bzw. stromauf des Oxidationskatalysators ist eine Reformateinleiteinrichtung vorgesehen, die auf geeignete Weise mit dem Reformer und der Abgasleitung gekoppelt ist. Die Zündung wird mittels eines Zündorgans erreicht, das zwischen der jeweiligen Abgasbehandlungseinrichtung und einer Einleitstelle der Reformateinleiteinrichtung an bzw. in der Abgasleitung angeordnet ist.

Erfindungsgemäß weist die Reformateinleiteinrichtung einen Reformatwärmeübertrager auf, der in die Reformatleitung eingebunden ist. Erfindungsgemäß ist die wenigstens eine Abgasbehandlungseinrichtung ein NOX-Speicher zum Speichern von im Motorabgas enthaltenem NOX und ist ein den NOX-Speicher abgasseitig umgehender Bypass vorgesehen, wobei die dem NOX-Speicher zugeordnete Einleitstelle stromab einer Abzweigstelle angeordnet ist, an welcher der Bypass von der Abgasleitung abzweigt. Bei einer vorteilhaften Ausführungsform ist der Brennstoff, aus dem der Reformer das Wasserstoffgas enthaltende Reformatgas gewinnt, durch den Kraftstoff gebildet, mit dem die Brennkraftmaschine betrieben wird. Bei dieser Ausführungsform ist der Reformer an einen Kraftstofftank angeschlossen, an den auch die Brennkraftmaschine angeschlossen ist.

Bei einer weiteren vorteilhaften Ausführungsform kann der Reformer Bestandteil eines Brennstoffzellensystems sein, das neben dem Reformer zumindest eine Brennstoffzelle zum Generieren von elektrischem Strom aus einem durch das Reformatgas gebildeten Anodengas und einem Sauerstoffgas enthaltenden Oxidatorgas aufweist. Ein derartiges Brennstoffzellensystem kann in einem Fahrzeug als zusätzliche oder als einzige Stromquelle vorgesehen sein, um elektrische Verbraucher des Fahrzeugs mit Strom zu versorgen. Bei einer derartigen Ausführungsform verwendet die Erfindung einen im Fahrzeug ohnehin vorhandenen Reformer und koppelt das Brennstoffzellensystem mit der Abgasleitung über die Reformateinleiteinrichtung. Bei einem derartigen Fahrzeug gestaltet sich die Realisierung der vorliegenden Erfindung besonders preiswert. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche, ähnliche oder funktional gleiche Komponenten beziehen. Es zeigen, jeweils schematisch,

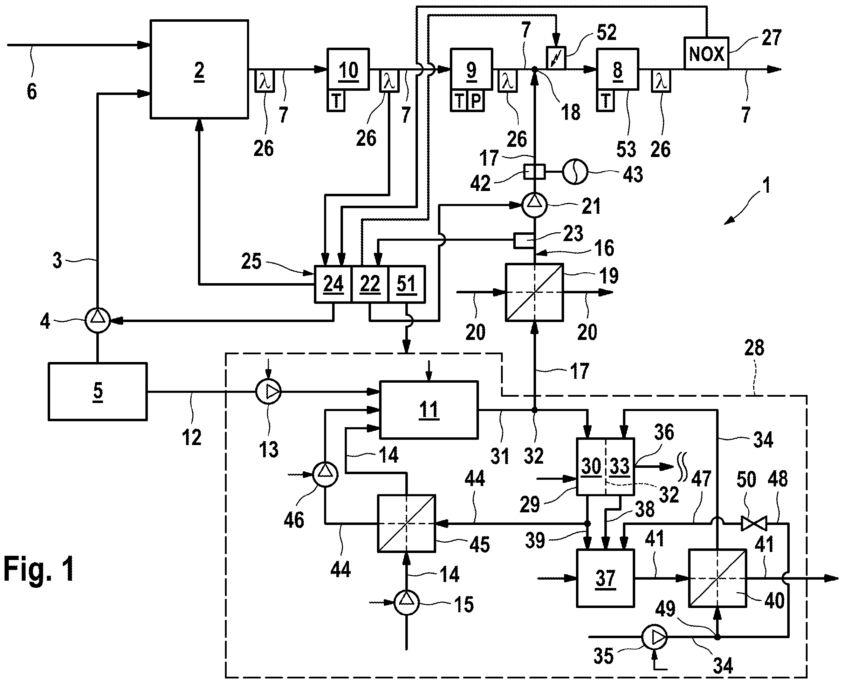

- Fig. 1 bis 4: jeweils eine stark vereinfachte, schaltplanartige Prinzipdarstellung eines Brennkraftmaschinensystems unterschiedlicher Ausführungsformen.

Entsprechend den Fig. 1 bis 4 umfasst ein Brennkraftmaschinensystem 1, das vorzugsweise in einem Kraftfahrzeug angeordnet ist, eine Brennkraftmaschine 2, z.B. ein Kolbenmotor, die in üblicher Weise mit einem Kraftstoff betrieben wird und die zum Generieren mechanischer Antriebsleistung dient. Verwendet wird dabei als Kraftstoff ein Kohlenwasserstoff, wie z.B. Benzin, Diesel oder Erdgas. Den Kraftstoff erhält die Brennkraftmaschine 2 über eine Kraftstoffleitung 3, in der eine Kraftstofffördereinrichtung 4, z.B. eine Pumpe, angeordnet ist. Die Kraftstoffleitung 3 ist an einen Kraftstofftank 5 angeschlossen, in dem der Kraftstoff bevorratet ist. An die Brennkraftmaschine 2 ist außerdem eine Frischgasleitung 6 angeschlossen, über die die Brennkraftmaschine 2 mit einem Sauerstoff enthaltendem Frischgas, vorzugsweise Luft, versorgt wird.

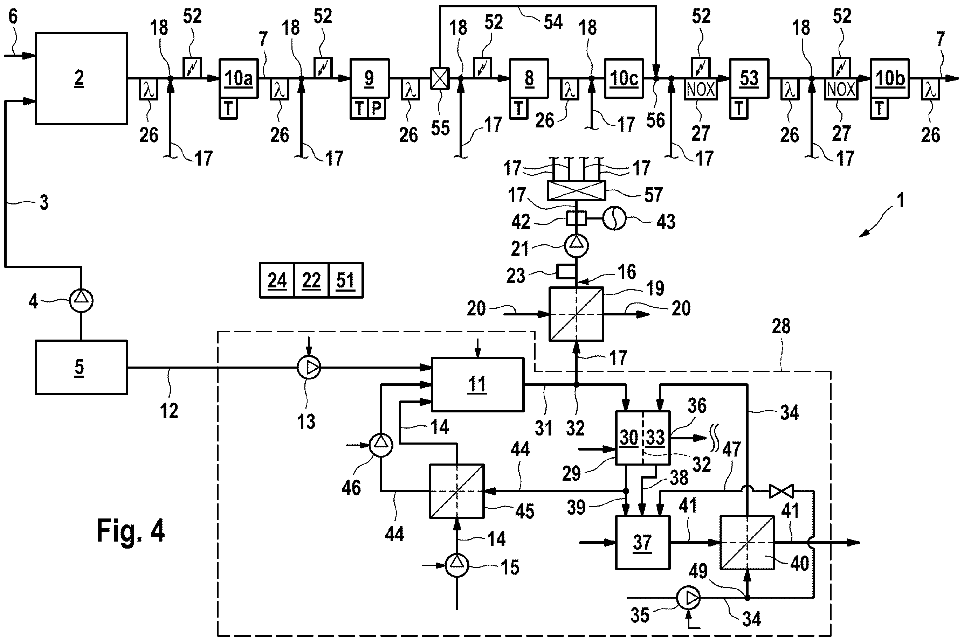

Ferner umfasst das Brennkraftmaschinensystem 1 eine Abgasleitung 7, die an die Brennkraftmaschine 2 angeschlossen ist und die Motorabgas von der Brennkraftmaschine 2 abführt, das im Betrieb der Brennkraftmaschine 2 bei der Verbrennung des Kraftstoffs entsteht. Die Abgasleitung 7 enthält in den gezeigten Beispielen zumindest eine Abgasbehandlungseinrichtung. Eine solche Abgasbehandlungseinrichtung kann z.B. ein NOX-Speicher 8 sein, der vorzugsweise durch einen NOX-Speicherkatalysator gebildet ist. Der NOX-Speicher 8 ist so ausgestaltet, dass er bei seiner Durchströmung mit Motorabgas darin enthaltenes NOX einlagert bzw. speichert. An Stelle des NOX-Speichers 8 oder auch zusätzlich kann ein SCR-Katalysator 53 als Abgasbehandlungseinrichtung vorgesehen sein, der mittels selektiver katalytischer Reduktion mit Hilfe von Ammoniak Stickoxide zu Wasser und Stickstoff umsetzt. Der Ammoniak kann separat zugeführt werden, entweder direkt oder in Form einer wässrigen Harnstofflösung, die mittels Hydrolysereaktion in Ammoniak umgesetzt wird. Ebenso kann der Ammoniak on-board generiert werden, was mit Bezug auf Fig. 4 noch näher erläutert wird. Zusätzlich oder alternativ kann in der Abgasleitung 7, vorzugsweise stromauf des NOX-Speichers 8, eine als Partikelfilter 9 ausgestaltete Abgasbehandlungseinrichtung angeordnet sein. Ein solches Partikelfilter 9 kommt vorzugsweise bei einer als Dieselmotor ausgebildeten Brennkraftmaschine 2 zur Anwendung und dient das zum Abreinigen von Partikeln, vorzugsweise Rußpartikel, die das Motorabgas mitführt. Zusätzlich oder alternativ kann in der Abgasleitung 7, zweckmäßig stromauf des NOX-Speichers 8 bzw. stromauf des Partikelfilters 9, eine als Oxidationskatalysator 10 ausgestaltete Abgasbehandlungseinrichtung angeordnet sein. Der Oxidationskatalysator dient insbesondere dazu, beim überstöchiometrischen Betrieb der Brennkraftmaschine 2, also bei einem Betrieb mit Luft- bzw. Sauerstoffüberschuss, durch unvollständige Verbrennungsvorgänge in der Brennkraftmaschine 2 nicht oder nicht vollständig umgesetzte Kohlenwasserstoffe und Kohlenmonoxid umzusetzen.

Das erfindungsgemäße Brennkraftmaschinensystem 1 ist außerdem mit einem Reformer 11 ausgestattet, der dazu dient, aus einem Wasserstoff enthaltenden Brennstoff und einem Sauerstoff enthaltenden Oxidator ein Wasserstoffgas enthaltendes Reformatgas zu generieren. Derartige Reformer 11 sind beispielsweise aus Brennstoffzellensystemen bekannt und arbeiten beispielsweise mit partieller Oxidation eines Kohlenwasserstoffs, die z.B. bei einem stark unterstöchiometrischen Betrieb mit Hilfe eines entsprechenden Katalysators realisierbar ist. Als Brennstoff eignen sich für den Reformer 11 daher Kohlenwasserstoffe, wie z.B. Benzin, Diesel, Biodiesel und Erdgas, die Wasserstoff molekular bzw. atomar, also chemisch gebunden, enthalten. Zweckmäßig ist dabei eine Ausführungsform, bei welcher der Reformer 11 als Brennstoff den Kraftstoff verwendet, mit dem auch die Brennkraftmaschine 2 betrieben wird. Dementsprechend ist hier eine Brennstoffleitung 12 vorgesehen, die ebenfalls an den Kraftstofftank 5 angeschlossen ist. Die Brennstoffleitung 12 versorgt den Reformer 11 mit dem als Brennstoff dienenden Kraftstoff und enthält hierzu vorzugsweise eine Brennstofffördereinrichtung 13, z.B. eine Pumpe. Zur Versorgung des Reformers 11 mit einem geeigneten Oxidator ist eine Oxidatorleitung 14 vorgesehen, in der eine entsprechende Oxidatorfördereinrichtung 15, z.B. ein Gebläse, angeordnet sein kann. Diese Oxidatorfördereinrichtung 15 realisiert aus Kostengründen ein kleineres Druckniveau als die Brennkraftmaschine 2. Als Oxidator dient vorzugsweise Luft.

Das Brennkraftmaschinensystem 1 ist erfindungsgemäß außerdem mit einer Reformateinleiteinrichtung 16 ausgestattet, mit deren Hilfe zumindest ein Teil des vom Reformer 11 erzeugten Reformatgases in die Abgasleitung 7 einleitbar ist. Hierzu ist die Reformateinleiteinrichtung 16 auf geeignete Weise mit dem Reformer 11 und mit der Abgasleitung 7 gekoppelt.

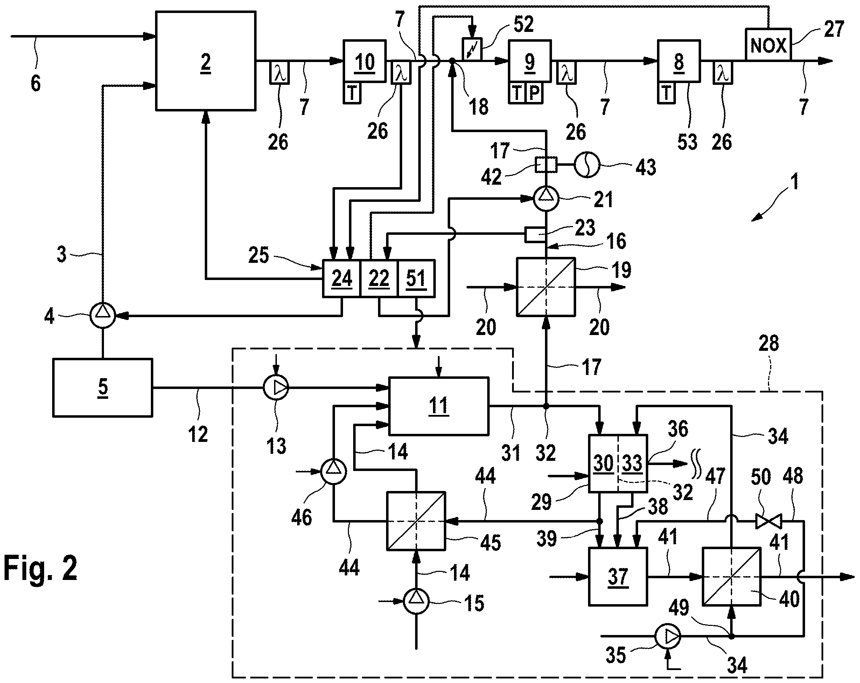

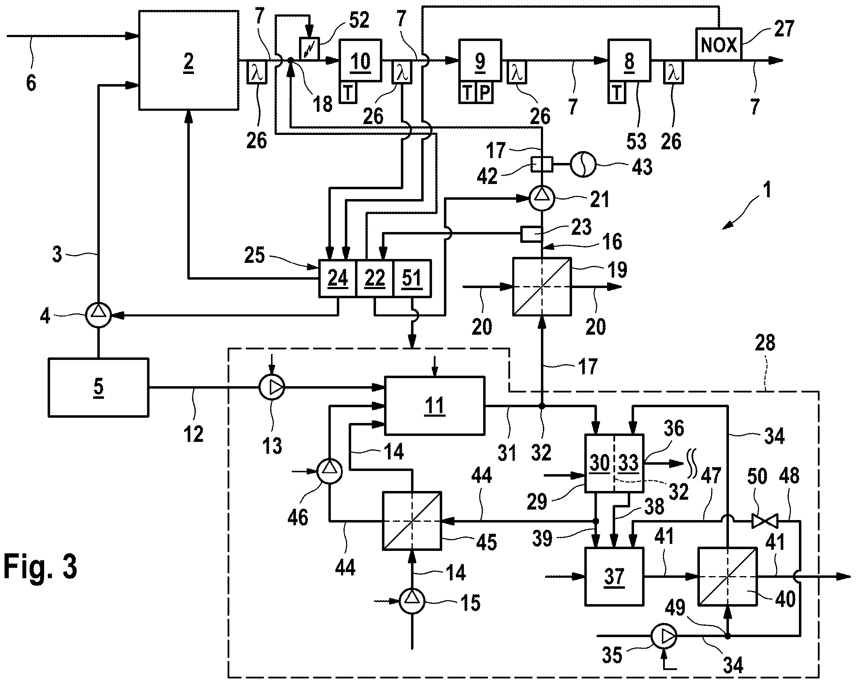

Die Reformateinleiteinrichtung 16 umfasst hierbei eine Reformatleitung 17, die eingangsseitig mit dem Reformer 11 kommuniziert und die ausgangsseitig über eine Einleitstelle 18 an die Abgasleitung 7 angeschlossen ist. Die Einleitstelle 18 ist bei der in Fig. 1 gezeigten Ausführungsform stromauf des NOX-Speichers 8 bzw. des SCR-Katalysators 53 und stromab des Partikelfilters 9 angeordnet. Bei der in Fig. 2 gezeigten Ausführungsform ist die Einleitstelle 18 stromauf des Partikelfilters 9 und stromab des Oxidationskatalysators 10 angeordnet. Bei der in Fig. 3 gezeigten Ausführungsform ist die Einleitstelle 18 stromauf des Oxidationskatalysators 10 angeordnet. Im Übrigen unterscheiden sich die drei gezeigten Ausführungsformen nicht. Weitere Ausführungsformen können sich durch Kombinationen der gezeigten Beispiele ergeben. Denkbar ist z.B. eine Ausführungsform, bei der die Reformateinleiteinrichtung 16 so ausgestaltet ist, dass sie bedarfsabhängig Reformatgas stromauf des NOX-Speichers 8 bzw. des SCR-Katalysators 53 und/oder stromauf des Partikelfilters 9 und/oder stromauf des Oxidationskatalysators 10 in die Abgasleitung 7 einleiten kann. Hierzu ist die Reformatleitung 17 über entsprechende Zweige zumindest an zwei der drei gezeigten Einleitstellen 18 an die Abgasleitung 7 angeschlossen. Die gezielte Einbringung des Reformatgases an den verschiedenen Einleitstellen kann z.B. mit Hilfe einer entsprechenden Ventileinrichtung realisiert werden.

Darüber hinaus umfasst das Brennkraftmaschinensystem 1 zumindest ein Zündorgan 52, das in der Abgasleitung 7 stromauf der jeweiligen Abgasbehandlungseinrichtung 8, 9, 10, 53 und stromab der jeweiligen Einleitstelle 18 angeordnet ist und das so ausgestaltet ist, dass damit ein zündfähiges Reformatgas-Abgas-Gemisch gezündet werden kann. Beispielsweise handelt es sich beim Zündorgan 52 um einen Glühstift oder um eine Zündkerze.

In der Reformatleitung 17 ist erfindungsgemäß ein Reformatwärmeübertrager 19 angeordnet. Auf diese Weise kann mit Hilfe eines entsprechenden Kühlmediums dem Reformatgas Wärme entzogen werden, bevor es in die Abgasleitung 7 eingeleitet wird. Bei einer bevorzugten Ausführungsform kann der Reformatwärmeübertrager 19 in einen Kühlkreis 20 der Brennkraftmaschine 2 eingebunden sein, so dass er die Reformatleitung 17 mit dem Kühlkreis 20 wärmeübertragend koppelt. Dementsprechend kann die dem Reformatgas entzogene Wärme über einen ohnehin vorhandenen Kühlkreis abgeführt werden. Gleichzeitig kann ein gegebenenfalls vorhandener Wärmebedarf der Brennkraftmaschine 2 hierdurch zumindest teilweise gedeckt werden. Der Reformatwärmeübertrager 19 ist vorzugsweise so ausgelegt, dass das darin gekühlte Reformatgas jedenfalls nicht unter die Taupunkttemperatur bzw. Kondensationstemperatur abgekühlt wird, um eine Kondensation von im Reformatgas enthaltenen Wasserdampf und Restkohlenwasserstoffen zu vermeiden. Für die Reformatgaseinleitung in die Abgasleitung 7 während eines Kaltstarts der Brennkraftmaschine 2 kann der Reformatwärmeübertrager 19 deaktiviert werden, um möglichst viel Wärme mit dem Reformatgas in die Abgasleitung 7 einbringen zu können.

Die Reformateinleiteinrichtung 16 kann ferner eine Reformatfördereinrichtung 21 aufweisen, z.B. ein Gebläse, eine Pumpe oder einen Kompressor, die in der Reformatleitung 17, und zwar vorzugsweise stromab des Reformatwärmeübertragers 19 angeordnet ist. Durch die Anordnung stromab des Reformatwärmeübertragers 19 kann die Reformatfördereinrichtung 21 vergleichsweise preiswert realisiert werden, da sie nur eine reduzierte Temperaturbeständigkeit aufweisen muss. Sofern die Oxidatorfördereinrichtung 15 stärker ausgelegt wird und ein hinreichendes Druckniveau gegenüber der Abgasanlage der Brennkraftmaschine 2 realisieren kann, ist es grundsätzlich möglich, auf die Reformatfördereinrichtung 21 und/oder auf den Reformatwärmeübertrager 19 zu verzichten. Dementsprechend sind dann auch die anderen Fördereinrichtungen 13, 35 und 46 des Brennstoffzellensystems 28 auf das erhöhte Druckniveau anzupassen.

Die Reformateinleiteinrichtung 16 kann außerdem mit einer Ventileinrichtung 42 ausgestattet sein, die vorzugsweise stromab der Reformatfördereinrichtung 21 in der Reformatleitung 17 angeordnet ist. Die Ventileinrichtung 42 dient dazu, eine unerwünschte Rückströmung von Motorabgas durch die Reformatleitung 17 zum Reformer 11 zu verhindern und kann hierzu z.B. als Rückschlagsperrventil ausgestaltet sein. Optional kann des Weiteren ein Reformatspeicher 43 vorhanden sein, der vorzugsweise stromab der Reformatfördereinrichtung 21 an die Reformatleitung 17 angeschlossen ist. Im gezeigten Beispiel erfolgt die Kopplung zwischen dem Reformatspeicher 43 und der Reformatleitung 17 über die Ventileinrichtung 42, die dann zur Realisierung entsprechender Schaltzustände zum Aufladen des Reformatspeichers 43 mit Reformatgas aus dem Reformer 11 und zum Entladen des Reformatspeichers 43 durch Einleiten des Reformatgases in die Abgasleitung 7 ausgestaltet ist. Hierdurch ist es beispielsweise möglich, das Reformatgas unter einem vorbestimmten Druck im Reformatspeicher 43 zu speichern und bei Bedarf und einer Luftzahl der Brennkraftmaschine 2 kleiner 1 impuls- oder schlagartig in die Abgasleitung 7 zu entladen.

Zweckmäßig ist das Brennkraftmaschinensystem 1 mit einer Steuerung 22 ausgestattet, mit deren Hilfe die Reformateinleiteinrichtung 16 betätigbar ist. Hierzu ist diese Reformateinleitsteuerung 22 zweckmäßig mit der Reformatfördereinrichtung 21 gekoppelt. Ferner kann die Reformateinleitsteuerung 22 mit einem Temperatursensor 23 gekoppelt sein, der in oder an der Reformatleitung 17 stromab des Reformatwärmeübertragers 19 angeordnet ist und die Reformatgastemperatur ermittelt. Die Reformateinleitsteuerung 22 ist außerdem mit der Brennkraftmaschine 2 bzw. mit einer mit der Brennkraftmaschine 2 gekoppelten Motorsteuerung 24 gekoppelt. Vorzugsweise sind die Reformateinleitsteuerung 22 und die Motorsteuerung 24 in einem gemeinsamen Steuergerät 25 angeordnet. Die Motorsteuerung 24 betätigt beispielsweise die Kraftstofffördereinrichtung 4, die zweckmäßig durch eine Einspritzeinrichtung gebildet ist. Ferner ist die Motorsteuerung 24 z.B. mit einer Lambda-Sonde 26 gekoppelt, welche die Luftzahl im Motorabgas bestimmt. Die Anordnung der Lambda-Sonde 26 an oder in der Abgasleitung 7 zwischen dem Oxidationskatalysator 10 und dem Partikelfilter 9 ist hier rein exemplarisch; insbesondere kann die Lambda-Sonde 26 bzw. können weitere in den Fig. 1 bis 4 auch mit "λ" gekennzeichnete Lambda-Sonden 26 zwischen NOX-Speicher 8 bzw. SCR-Katalysator 53 und Partikelfilter 9 oder stromab des NOX-Speichers 8 bzw. SCR-Katalysator 53 oder stromauf des Oxidationskatalysators 10 an oder in der Abgasleitung 7 angeordnet sein. Ebenso kann die jeweilige Lambda-Sonde 26 in die jeweilige Abgasbehandlungseinrichtung 8, 9, 10, 53 integriert sein. Optional kann die Motorsteuerung 24 noch mit einer NOX-Sonde 27 gekoppelt sein, die stromab des NOX-Speichers 8 bzw. des SCR-Katalysators 53 an oder in der Abgasleitung 7 angeordnet ist und mit der NOX im Motorabgas detektierbar ist. Beispielsweise kann mit Hilfe einer derartigen NOX-Sonde 27 der Beladungszustand des NOX-Speichers 8 ermittelt werden. Sobald die NOX-Sonde 27 NOX im Motorabgas feststellt, ist eine Regeneration des NOX-Speichers 8 erforderlich. Ferner können mit "T" gekennzeichnete Temperatursensoren und mit "P" gekennzeichnete Drucksensoren vorgesehen sein.

Vorzugsweise ist das Fahrzeug, das mit dem Brennkraftmaschinensystem 1 ausgestattet ist, außerdem mit einem Brennstoffzellensystem 28 ausgestattet, das in Fig. 1 durch einen mit unterbrochener Linie gezeichneten Rahmen eingefasst ist. Der Reformer 11 bildet dabei einen wesentlichen Bestandteil dieses Brennstoffzellensystems 28. Das erfindungsgemäße Brennkraftmaschinensystem 1 verwendet somit einen am Fahrzeug ohnehin vorhandenen Bestandteil, nämlich den Reformer 11 bzw. dessen Reformatgas zur Regeneration des NOX-Speichers 8 bzw. zur Regeneration des Partikelfilters 9 bzw. zum Aufheizen des Partikelfilters 9 bzw. zum Aufheizen des Oxidationskatalysators 10 bzw. zum Aufheizen des SCR-Katalysators 53. Die Reformateinleiteinrichtung 16 realisiert dabei die Kopplung zwischen dem Brennstoffzellensystem 28 und der Abgasleitung 7.

Das Brennstoffzellensystem 28 umfasst neben dem Reformer 11 zumindest eine Brennstoffzelle 29. Diese dient in bekannter Weise zum Generieren von elektrischem Strom aus einem Wasserstoffgas enthaltenden Anodengas und einem Sauerstoffgas enthaltenden Kathodengas. Als Anodengas dient dabei das vom Reformer 11 generierte Reformatgas, das einer Anodenseite 30 der Brennstoffzelle 29 über eine eingangsseitig mit dem Reformer 11 kommunizierende Anodengasleitung 31 zugeführt wird. Bei einer Abzweigstelle 32 erfolgt die Kopplung zwischen der Reformateinleiteinrichtung 16 und dem Brennstoffzellensystem 28. Bei der Abzweigstelle 32 zweigt die Reformatleitung 17 von der mit dem Reformer 11 verbundenen Anodengasleitung 31 ab. Alternativ zweigt bei der Abzweigung 32 die Anodengasleitung 31 von der mit dem Reformer 11 verbundenen Reformatleitung 17 ab.

In der Brennstoffzelle 29 ist die Anodenseite 30 durch ein Elektrolyt 32, das insbesondere eine Membran ist, von einer Kathodenseite 33 getrennt. Der Kathodenseite 33 wird das Kathodengas über eine Kathodengasleitung 34 zugeführt, in der eine Kathodengasfördereinrichtung 35, z.B. ein Gebläse, angeordnet sein kann. Als Kathodengas wird vorzugsweise Luft verwendet.

Die Brennstoffzelle 29 weist zumindest einen elektrischen Anschluss 36 auf, an dem im Betrieb der Brennstoffzelle 29 elektrischer Strom abgreifbar ist. Die Brennstoffzelle 29 kann als Hochtemperatur-Brennstoffzelle, insbesondere als Festkörper-Brennstoffzelle, sog. SOFC-Brennstoffzelle ausgestaltet sein. Ebenso ist es möglich, die Brennstoffzelle 29 als Niedertemperatur-Brennstoffzelle auszugestalten, insbesondere als PEM-Brennstoffzelle, die mit einer Protonen-Transport-Membran bzw. mit einer Polymer-Elektrolyt-Membran arbeitet. Sofern es sich um eine PEM-Brennstoffzelle handelt, ist der Reformer 11 zweckmäßig mit einer CO-Gasreinigungseinrichtung ausgestattet, um den Kohlenmonoxidgehalt im Reformatgas zu Gunsten der PEM-Brennstoffzelle zu reduzieren.

Vorzugsweise kann das Brennstoffzellensystem 28 mit einem Restgasbrenner 37 ausgestattet sein, in dem eine Verbrennung von Wasserstoffgas enthaltendem Anodenabgas mit Sauerstoffgas enthaltenden Kathodenabgas stattfindet. Vorzugsweise kann der Restgasbrenner 37 in die Brennstoffzelle 29 ausgangsseitig integriert sein, so dass die Brennstoffzelle 29 und der Restgasbrenner 37 eine bauliche Einheit bilden. Im gezeigten Beispiel wird dem Restgasbrenner 37 das Kathodenabgas über eine Kathodenabgasleitung 38 zugeführt, während er das Anodenabgas über eine Anodenabgasleitung 39 erhält.

Das Brennstoffzellensystem 28 ist vorzugsweise mit wenigstens einem Wärmeübertrager 40 ausgestattet, der einerseits in eine Brennerabgasleitung 41 und andererseits z.B. in die Kathodengasleitung 34 eingebunden ist. Der Wärmeübertrager 40 dient zur wärmeübertragenden Kopplung des vom Restgasbrenner 37 erzeugten Brennerabgases mit dem der Brennstoffzelle 29 zuzuführenden Kathodengas. Bei einer bevorzugten Ausführungsform kann der Wärmeübertrager 40 in den Restgasbrenner 37 ausgangsseitig baulich integriert sein. Der Restgasbrenner 37 bildet dann zusammen mit dem Wärmeübertrager 40 eine bauliche Einheit.

Das Brennstoffzellensystem 28 kann außerdem mit einer Rezirkulationsleitung 44 ausgestattet sein, die einerseits an die Anodenabgasleitung 39 und andererseits an die Eingangsseite des Reformers 11 angeschlossen ist. Über die Rezirkulationsleitung 44 kann Wasserstoff enthaltendes Anodenabgas dem Reformerprozess zugeführt werden, was diesen verbessert. In der Rezirkulationsleitung 44 ist vorzugsweise ein Rezirkulationswärmeübertrager 45 angeordnet, der außerdem z.B. in der Oxidatorleitung 14 angeordnet ist. Dieser Rezirkulationswärmeübertrager 45 bewirkt im Betrieb einerseits eine Erwärmung des Oxidators, was den Reformerprozess verbessert, und andererseits eine Kühlung des rezirkulierten Anodenabgases, was es ermöglicht, stromab des Rezirkulationswärmeübertragers 45 eine vergleichsweise preiswerte Rezirkulationsfördereinrichtung 46, z.B. eine Pumpe, einen Kompressor oder ein Gebläse, in der Rezirkulationsleitung 45 zum Antreiben des Anodenabgases anzuordnen.

Insbesondere für einen Startvorgang des Brennstoffzellensystems 28 kann außerdem der Restgasbrenner 37 mit einer Kühlgasversorgung 47 ausgestattet sein, die z.B. über eine Kühlgasleitung 48 dem Restgasbrenner 37, bevorzugt kathodenseitig, ein geeignetes Kühlgas, vorzugsweise Luft, zuführt. Beispielsweise zweigt die Kühlgasleitung 48 bei 49 stromauf des Wärmeübertragers 40 von der Kathodengasleitung 34 ab. Zum Regulieren der Kühlgasmenge kann ein entsprechendes Stellglied 50 vorgesehen sein.

Ferner ist auch das Brennstoffzellensystem 28 zweckmäßig mit einer Steuerung 51 ausgestattet. Diese Brennstoffzellensystemsteuerung 51 kommuniziert auf geeignete Weise mit der Steuerung 22 und/oder mit der Motorsteuerung 24 und kann - wie hier - im Steuergerät 25 angeordnet sein. Die Brennstoffzellensystemsteuerung 51 dient zur Betätigung des Brennstoffzellensystems 28 bzw. der einzelnen Komponenten des Brennstoffzellensystems 28. Beispielsweise ist hierzu die Brennstoffzellensystemsteuerung 51 mit den Fördereinrichtungen 13, 15, 35, 46, mit dem Stellglied 50, mit dem Reformer 11, mit der Brennstoffzelle 29, mit dem Restgasbrenner 37 und mit dem oder den Zündorganen 52 verbunden. Die jeweilige Lambda-Sonde 26 kann alternativ oder zusätzlich mit der Brennstoffzellensystemsteuerung 51 und/oder mit der Reformateinleitsteuerung 22 gekoppelt sein. Die jeweilige Steuerung 22, 24, 51 kann zumindest eine ihrer Steuerfunktionen insbesondere in Abhängigkeit der Signale wenigstens einer Lambda-Sonde 26 ausführen.

Fig. 4 zeigt eine weitere spezielle Ausführungsform des Brennkraftmaschinensystems 1. Die in Fig. 4 gezeigte Ausführungsform weist exemplarisch drei Oxidationskatalysatoren 10 auf, nämlich einen motornahen Oxidationskatalysator 10a, der zwischen der Brennkraftmaschine 2 und dem Partikelfilter 9 angeordnet ist, sowie einen motorfernen Oxidationskatalysator 10b, der stromab des SCR-Katalysators 53 angeordnet ist, und einen mittleren Oxidationskatalysator 10c, der zwischen dem SCR-Katalysator 53 und dem NOX-Speicher 8 angeordnet ist. Ferner ist bei dieser Ausführungsform ein den NOX-Speicher 8 und den gegebenenfalls vorhandenen mittleren Oxidationskatalysator 10c umgehender Bypass 54 vorgesehen. Der Bypass 54 zweigt über eine Ventileinrichtung 55 von der Abgasleitung 7 zwischen dem Partikelfilter 9 und der Einleitstelle 18 ab und mündet bei 56 zwischen dem mittleren Oxidationskatalysator 10c und dem SCR-Katalysator 53 wieder in die Abgasleitung 7 ein. Die Ventileinrichtung 55 ist z.B. über die Reformatgaseinleitsteuerung 22 ansteuerbar und kann insbesondere zwischen zwei Stellungen geschaltet werden. In der einen Schaltstellung leitet sie das Abgas durch den NOX-Speicher 8 und den mittleren Oxidationskatalysator 10c. In der anderen Schaltstellung leitet sie das Abgas der Brennkraftmaschine 2 durch den Bypass 54, so dass das Abgas den NOX-Speicher 8 und den mittleren Oxidationskatalysator 10c umgeht. Während dieser Bypass-Strömung kann besonders effektiv eine Regeneration des NOX-Speichers 8 realisiert werden, indem während dieser Zeit Reformatgas über die unmittelbar stromauf des NOX-Speichers 8 angeordnete Einleitstelle 18, die stromab der Ventileinrichtung 55 positioniert ist, eingeleitet wird. Gegebenenfalls wird dieses Reformat mit dem Zündorgan 52 gezündet. In jedem Fall kann mit Hilfe des eingeleiteten Reformatgases der NOX-Speicher 8 regeneriert werden. Da das Motorabgas während dieser Zeit den NOX-Speicher 8 umgeht, kann der Motor 2 unverändert, also überstöchiometrisch betrieben werden.

Im normalen überstöchiometrischen Betrieb des Motors 2 wird NOX im NOX-Speicher 8 eingelagert. Nicht eingelagerte Reste an NOX können den mittleren Oxidationskatalysator 10c ungehindert durchströmen und gelangen so in den SCR-Katalysator 53. Der SCR-Katalysator 53 kann NOX mit eingelagertem Ammoniak umsetzen, bis das eingelagerte Ammoniak verbraucht ist. Sobald dies der Fall ist, muss er regeneriert werden. Dies erfolgt bevorzugt mit Ammoniak. Beim Regenerieren des NOX-Speichers 8 wird mit Hilfe des zugeführten Reformatgases NOX desorbiert und kann im nachfolgenden mittleren Oxidationskatalysator 10c mit Reformatgas zu Wasser und Ammoniak umgesetzt werden. Hierzu kann eine dem mittleren Oxidationskatalysator 10c zugeordnete weitere Einleitstelle 18 für Reformatgas, gegebenenfalls auch mit zugehöriger Zündeinrichtung 52 (nicht gezeigt), unmittelbar stromauf des mittleren Oxidationskatalysators 10c angeordnet sein. Beim mittleren Oxidationskatalysator 10c handelt es sich bevorzugt um einen Drei-Wege-Katalysator. Das auf diese Weise on-board erzeugte Ammonial wird im SCR-Katalysator 53 einerseits dazu genutzt, das Abgas der Brennkraftmaschine 2, das über den Bypass 54 dem SCR-Katalysator 53 zugeführt wird, von NOX zu reinigen, was durch Umsetzen von NOX mit Ammoniak zu Wasser und Stickstoff erfolgt. Andererseits kann dabei gleichzeitig der SCR-Katalysator 53 regeneriert werden, indem überschüssiges Ammoniak eingelagert wird. Ammoniak, das dennoch aus dem SCR-Katalysator 53 austritt, kann im nachfolgenden motorfernen Oxidationskatalysator 10b umgesetzt werden.

Bei der hier gezeigten Ausführungsform sind fünf Einleitstellen 18 für Reformat vorgesehen, die kumulativ oder alternativ oder in beliebiger Kombination realisiert werden können. Bei mehreren Einleitstellen 18 sind entsprechende Zweige der Reformatleitung 17 mittels einer Ventileinrichtung 57 einzeln steuerbar.

Das erfindungsgemäße Brennkraftmaschinensystem 1 arbeitet wie folgt:
Im normalen Betrieb der Brennkraftmaschine 2 wird diese stöchiometrisch oder überstöchiometrisch, also mit Luftüberschuss gestartet und betrieben. In diesem Normalbetrieb erzeugt die Brennkraftmaschine 2 Motorabgas, das NOX enthält. Das NOX wird im NOX-Speicher 8 eingelagert, sobald dieser eine vorbestimmte Mindesttemperatur aufweist. Weiter fallen im Betrieb der Brennkraftmaschine 2 Partikel an, die das Partikelfilter 9 dem Motorabgas entzieht und einlagert. Sobald der NOX-Speicher 8 einen vorbestimmten Sättigungsgrad erreicht, ist eine Regeneration des NOX-Speichers 8 erforderlich. Entsprechend ist eine Regeneration des Partikelfilters 9 erforderlich, sobald das Partikelfilter 9 einen vorbestimmten Beladungsgrad erreicht. Alternativ kann die Regeneration des NOX-Speichers 8 bzw. des Partikelfilters 9 in Abhängigkeit vorbestimmter Betriebszeitdauern der Brennkraftmaschine 2 durchgeführt werden.

Für die Regeneration des NOX-Speichers 8 wird die Brennkraftmaschine 2 stöchiometrisch oder leicht unterstöchiometrisch, jedenfalls nicht überstöchiometrisch betrieben. Bei einem stöchiometrischen Betrieb ist die Luftzahl gleich 1. Bei einem unterstöchiometrischen Betrieb wird die Luftzahl auf einen Wert kleiner als 1,0 eingestellt. Der stöchiometrische oder leicht unterstöchiometrische Betrieb der Brennkraftmaschine 2 wird über die Steuerung 22 bzw. über die Motorsteuerung 24 eingestellt.

Während dieses Regenerationsbetriebs der Brennkraftmaschine 2 steuert die Reformateinleitsteuerung 22, insbesondere in Verbindung mit der jeweiligen Lambda-Sonde 26, die Reformateinleiteinrichtung 16 zum Einleiten von Reformatgas in die Abgasleitung 7 stromauf des NOX-Speichers 8 bzw. zwischen dem Partikelfilter 9 und dem NOX-Speicher 8 an. Hierzu betätigt die Steuerung 22 beispielsweise die Reformatfördereinrichtung 21 auf geeignete Weise. Das während des Betriebs des Reformers 11 bzw. während des Betriebs des Brennstoffzellensystems 28 generierte Reformatgas wird somit zumindest teilweise über die Reformatleitung 17 in die Abgasleitung 7 eingespeist, vermischt sich dort mit dem Motorabgas und führt im NOX-Speicher 8 zur gewünschten Regenerationsreaktion.

Sofern für den Regenerationsbetrieb oder für den Startbetrieb oder für den Normalbetrieb eine Aufheizung des NOX-Speichers 8 erforderlich ist, kann mit dem jeweiligen Zündorgan 52 das Reformatgas-Abgas-Gemisch gezündet werden, wenn der Motor 2 hierbei überstöchiometrisch betrieben wird. Sobald die Regeneration des NOX-Speichers 8 beendet ist, z.B. nach einer vorbestimmten Zeitdauer, oder bei Erreichen einer vorbestimmten Temperatur deaktiviert die Reformateinleitsteuerung 22 die Reformatfördereinrichtung 21. Außerdem wird die Brennkraftmaschine 2 wieder in ihren Normalbetriebszustand zurückversetzt.

Wie bereits weiter oben erläutert kann die Regeneration des NOX-Speichers 8 auch dadurch realisiert werden, dass die Ventileinrichtung 55 zur Aktivierung des Bypasses 54 geschaltet wird, so dass das Abgas der Brennkraftmaschine 2 den NOX-Speicher 8 umgeht. Dies hat den Vorteil, dass für die Regenation des NOX-Speichers 8 die Ansteuerung des Motors 2 nicht verändert werden muss, so dass dieser insbesondere weiterhin überstöchiometrisch betrieben werden kann.

Für die Regeneration des Partikelfilters 9 betätigt die Reformateinleitsteuerung 22 die Reformateinleiteinrichtung 16 zum Einleiten von Reformatgas stromauf des Partikelfilters 9. Das heiße Reformatgas kann bereits die erwünschte Aufheizung des Partikelfilters 9 auf die Aktivierungs- bzw. Light-Off-Temperatur der Regenerationsreaktion bewirken. Demnach kann es ausreichend sein, das Reformatgas stromab des Oxidationskatalysators 10 in die Abgasleitung 7 einzuleiten. Ebenso kann das Reformatgas stromauf des Oxidationskatalysators 10 in die Abgasleitung 7 eingeleitet werden, um so durch die Umsetzung des Wasserstoffs im Oxidationskatalysator 10 Wärme zu erzeugen, die über die Abgasströmung in das Partikelfilter 9 gelangt und dieses aufheizt. Falls erforderlich kann das zündfähige Gemisch aus Reformatgas und magerem Abgas auch mit dem jeweiligen Zündorgan 52 aktiv gezündet werden.

Eine selbständige Einleitung von Reformatgas in die Abgasleitung 7 außerhalb des jeweiligen Regenerationsbetriebs ist während des Betriebs des Brennstoffzellensystems 28 bzw. des Reformers 11 nicht zu erwarten, da die Reformatleitung 17 durch den Reformatwärmeübertrager 19 und durch die Reformatfördereinrichtung 21 einen vergleichsweise hohen Durchströmungswiderstand aufweist. Grundsätzlich kann jedoch aus Sicherheitsgründen ein entsprechendes Sperrventil, z.B. die Ventileinrichtung 42, in der Reformatleitung 17 angeordnet sein.

Kumulativ oder alternativ kann vorgesehen sein, beim Starten der Brennkraftmaschine 2 auch bei einer Luftzahl größer als 1 die Reformateinleiteinrichtung 16 zum Einleiten von Reformatgas in die Abgasleitung 7 anzusteuern. Durch Einleiten des Reformatgases stromauf des NOX-Speichers 8 bzw. stromauf des SCR-Katalysators 53 bzw. stromauf des Oxidationskatalysators 10 ist es möglich, den NOX-Speicher 8 und/oder den SCR-Katalysator 53 und/oder den Oxidationskatalysator 10 rascher auf die jeweilige Aktivierungs- bzw. Betriebstemperatur zu bringen, die der NOX-Speicher 8 benötigt, um die gewünschte Speicherfunktion für NOX zu entfalten, bzw. die der SCR-Katalysator 53 benötigt, um die selektive katalytische Stickoxidreduktion mittels Ammoniak durchzuführen, bzw. die der Oxidationskatalysator 10 benötigt, um die gewünschte Oxidation von Restkohlenwasserstoffen und Kohlenmonoxid durchzuführen. Zusätzlich lassen sich auch hier das Reformatgas-Abgas-Gemisch mittels des jeweiligen Zündorgans 52 zünden und die Reaktionen mittels der jeweiligen Lambda-Sonde(n) 26 überwachen.

Während eines Kaltstarts der Brennkraftmaschine 2 kann vorteilhaft durch die Zuführung von Reformatgas in die Abgasleitung 7 die gesamte Abgasanlage bzw. deren Abgasbehandlungseinrichtungen 8, 9, 10 und 53 rasch auf Betriebstemperatur gebracht werden, da die Stoffströme des Brennstoffzellensystems 28 und der Brennkraftmaschine 2 bei diesem Startvorgang ein für die Verbrennung des Reformatgases mit dem Sauerstoff des Motorabgases geeignetes, durch die Lambda-Sonde 26 überwachtes Verhältnis aufweisen.

Vorteilhaft ist bei den unterschiedlichen Betriebszuständen, wenn die einzelnen Steuerungen 22, 24 und 51 insoweit miteinander kommunizieren, dass ein Parallelbetrieb des Brennstoffzellensystems 28 zur Stromerzeugung mit dem Bedarf an Reformatgas zum Starten der Brennkraftmaschine 2 bzw. zum Regenerieren des NOX-Speichers 8 bzw. des Partikelfilters 9 abgestimmt werden kann.

## Patentansprüche

1. Brennkraftmaschinensystem, insbesondere in einem Kraftfahrzeug,
- mit einer mit einem Kraftstoff betreibbaren Brennkraftmaschine (2) zum Generieren von Antriebsleistung,
- mit einer Abgasleitung (7) zum Abführen von Motorabgas,
- mit wenigstens einer in der Abgasleitung (7) angeordneten Abgasbehandlungseinrichtung (8, 9, 10, 53), die zum Starten und/oder zum Normalbetrieb und/oder zum Regenerieren eine Mindesttemperatur benötigt,
- mit einem Reformer (11) zum Generieren von Wasserstoffgas enthaltendem Reformatgas aus einem Wasserstoff enthaltenden Brennstoff und einem Sauerstoff enthaltenden Oxidator,
- mit einer Reformateinleiteinrichtung (16) zum Einleiten von Reformatgas in die Abgasleitung (7) an einer Einleitstelle (18) stromauf der jeweiligen Abgasbehandlungseinrichtung (8, 9, 10, 53),
- mit zumindest einem in der Abgasleitung (7) stromab der Einleitstelle (18) und stromauf der jeweiligen Abgasbehandlungseinrichtung (8, 9, 10, 53) angeordneten Zündorgan (52) zum Zünden eines zündfähigen Reformatgas-Abgas-Gemischs,
- wobei die Reformateinleiteinrichtung (16) eine Reformatleitung (17) aufweist, durch die das Reformatgas stromauf der wenigstens einen Abgasbehandlungseinrichtung (8, 9, 10, 53) in die Abgasleitung (7) einleitbar ist,
**dadurch gekennzeichnet,**
- **dass** die Reformateinleiteinrichtung (16) einen Reformatwärmeübertrager (19) aufweist, der in die Reformatleitung (17) eingebunden ist
- **dass** die wenigstens eine Abgasbehandlungseinrichtung ein NOX-Speicher (8) zum Speichern von im Motorabgas enthaltenem NOX ist und dass ein den NOX-Speicher (8) abgasseitig umgehender Bypass (54) vorgesehen ist, wobei die dem NOX-Speicher (8) zugeordnete Einleitstelle (18) stromab einer Abzweigstelle (55) angeordnet ist, an welcher der Bypass (54) von der Abgasleitung (7) abzweigt.

2. Brennkraftmaschinensystem nach Anspruch 1,
**dadurch gekennzeichnet,**
**dass** eine weitere Abgasbehandlungseinrichtung ein stromab des NOX-Speichers (8) angeordneter Oxidationskatalysator (10c) ist und dass der Bypass (54) auch diesen Oxidationskatalysator (10c) umgeht.

3. Brennkraftmaschinensystem nach Anspruch 1 oder 2,
**dadurch gekennzeichnet,**
- **dass** als weitere Abgasbehandlungseinrichtungen ein Partikelfilter (9) und stromab davon ein SCR-Katalysator (53) vorgesehen sind,
- **dass** drei als Oxidationskatalysatoren (10) ausgestaltete Abgasbehandlungseinrichtungen vorgesehen sind, nämlich ein zwischen der Brennkraftmaschine (2) und dem Partikelfilter (9) angeordneter motornaher Oxidationskatalysator (10a), ein stromab des SCR-Katalysators (53) angeordneter motorferner Oxidationskatalysator (10b) und ein zwischen dem NOX-Speicher (8) und dem SCR-Katalysator (53) angeordneter mittlerer Oxidationskatalysator (10c),
- **dass** der Bypass (54) den NOX-Speicher (8) und den mittleren Oxidationskatalysator (10c) umgeht und stromauf des SCR-Katalysators (53) wieder in die Abgasleitung (7) einmündet.

4. Brennkraftmaschinensystem nach einem der vorhergehenden Ansprüche,
**dadurch gekennzeichnet,**
**dass** der Reformatwärmeübertrager (19) in einen Kühlkreis (20) der Brennkraftmaschine (2) eingebunden ist, um die Reformatleitung (17) mit dem Kühlkreis (20) wärmeübertragend zu koppeln.

5. Brennkraftmaschinensystem nach einem der Ansprüche 1 bis 4,
**dadurch gekennzeichnet,**
- **dass** ein Kraftstofftank (5) zur Bevorratung des Kraftstoffs vorgesehen ist,
- **dass** eine Kraftstoffleitung (3) zur Versorgung der Brennkraftmaschine (2) mit dem Kraftstoff an den Kraftstofftank (5) angeschlossen ist,
- **dass** eine Brennstoffleitung (12) zur Versorgung des Reformers (11) mit dem als Brennstoff dienenden Kraftstoff an den Kraftstofftank (5) angeschlossen ist.

6. Brennkraftmaschinensystem nach einem der Ansprüche 1 bis 5,
**dadurch gekennzeichnet,**
**dass** die Reformateinleiteinrichtung (16) eine Reformatfördereinrichtung (21) aufweist, die in der Reformatleitung (17), insbesondere stromab des Reformatwärmeübertragers (19), angeordnet ist.

7. Brennkraftmaschinensystem nach einem der Ansprüche 1 bis 6,
**dadurch gekennzeichnet,**
**dass** die Reformateinleiteinrichtung (16) einen Reformatspeicher (43) mit Ventileinrichtung (42) aufweist, der an die Reformatleitung (17) angeschlossen ist.

8. Brennkraftmaschinesystem nach einem der Ansprüche 1 bis 7,
**dadurch gekennzeichnet,**
**dass** eine weitere Abgasbehandlungseinrichtung ein Partikelfilter (9) zum Speichern von im Motorabgas enthaltenen Partikeln oder ein Oxidationskatalysator (10) zum Umsetzen von im Motorabgas enthaltenen Kohlenwasserstoffen und Kohlenmonoxid oder ein SCR-Katalysator (53) zum selektiven katalytischen Reduzieren von Stickoxiden mit Ammoniak ist.

9. Brennkraftmaschinensystem nach einem der vorhergehenden Ansprüche,
**dadurch gekennzeichnet,**
**dass** eine mit der Brennkraftmaschine (2) oder einer Motorsteuerung (24) sowie mit der Reformateinleiteinrichtung (16) gekoppelte Steuerung (22) vorgesehen ist, die so ausgebildet ist,
- **dass** sie zum Regenerieren des NOX-Speichers (8) während eines stöchiometrischen oder unterstöchiometrischen Betriebs der Brennkraftmaschine (2) die Reformateinleiteinrichtung (16) zum Einleiten von Reformatgas in die Abgasleitung (7) stromauf des NOX-Speichers (8) ansteuert, und/oder
- **dass** sie zum Aufheizen des NOX-Speichers (8) während eines überstöchiometrischen Betriebs der Brennkraftmaschine (2) die Reformateinheiteinrichtung (16) zum Einleiten von Reformatgas in die Abgasleitung (7) stromauf des NOX-Speichers (8) ansteuert.

10. Brennkraftmaschinensystem nach den Ansprüchen 8 und 9,
**dadurch gekennzeichnet,**
**dass** die Steuerung (22) außerdem so ausgebildet ist,
- **dass** sie zum Regenerieren des Partikelfilters (9) während eines überstöchiometrischen Betriebs der Brennkraftmaschine (2) die Reformateinleiteinrichtung (16) zum Einleiten von Reformatgas in die Abgasleitung (7) stromauf des Partikelfilters (9) und/oder stromauf des Oxidationskatalysators (10) ansteuert, und/oder
- **dass** sie zum Aufheizen des Oxidationskatalysators (10) während eines überstöchiometischen Betriebs der Brennkraftmaschine (2) die Reformateinleiteinrichtung (16) zum Einleiten von Reformatgas in die Abgasleitung (7) stromauf des Oxidationskatalysators (10) ansteuert, und/oder
- **dass** sie zum Aufheizen des SCR-Katalysators (53) während eines überstöchiometrischen Betriebs der Brennkraftmaschine (2) die Reformateinleiteinrichtung (16) zum Einleiten von Reformatgas in die Abgasleitung (7) stromauf des SCR-Katalysators (53) ansteuert.

11. Brennkraftmaschinensystem nach einem der Ansprüche 1 bis 10,
**dadurch gekennzeichnet,**
**dass** zumindest eine der Brennkraftmaschine (2) oder der jeweiligen Abgasbehandlungseinrichtung (8, 9, 10, 53) zugeordnete Lambda-Sonde (26) vorgesehen ist, die insbesondere mit einer Steuerung (22, 24, 51) gekoppelt sein kann.

12. Brennkraftmaschinensystem nach einem der Ansprüche 1 bis 11,
**dadurch gekennzeichnet,**
**dass** der Reformer (11) Bestandteil eines Brennstoffzellensystems (28) ist, das neben dem Reformer (11) zumindest eine Brennstoffzelle (29) zum Generieren von elektrischem Strom aus einem durch das Reformatgas gebildeten Wasserstoffgas enthaltenden Anodengas und einem Sauerstoffgas enthaltenden Kathodengas aufweist.

13. Brennkraftmaschinensystem nach Anspruch 12,
**dadurch gekennzeichnet,**
**dass** das Brennstoffzellensystem (28) einen Restgasbrenner (37) zum Verbrennen von Wasserstoffgas enthaltenden Anodenabgas mit Sauerstoffgas enthaltendem Kathodenabgas aufweist.

14. Brennkraftmaschinensystem nach Anspruch 13,
**dadurch gekennzeichnet,**
**dass** das Brennstoffzellensystem (28) zumindest einen Wärmeübertrager (40) aufweist, der vom Restgasbrenner (37) erzeugtes Brennerabgas mit der Brennstoffzelle (29) zuzuführendem Kathodengas wärmeübertragend koppelt.

15. Brennkraftmaschinensystem nach einem der Ansprüche 1 bis 14,
**dadurch gekennzeichnet,**
**dass** wenigstens eine NOX-Sonde (27) zum Detektieren von NOX im Abgas vorgesehen ist, die an oder in der Abgasleitung (7) der Brennkraftmaschine (2) angeordnet ist, wobei insbesondere vorgesehen sein kann, die Signale der NOX-Sonde (27) in zumindest einer Steuerung (22, 24, 51) für Regenerationsvorgänge zu berücksichtigen.

## Claims

1. Combustion engine system, in particular in a motor vehicle, comprising
- an internal combustion engine (2) operated with fuel for generating drive power,
- an exhaust pipe (7) for removing engine exhaust,
- at least one exhaust processing device (8, 9, 10, 53) arranged in the exhaust pipe (7), which requires a minimum temperature for starting up and/or for normal operation and/or for regenerating,
- a reformer (11) for generating reformate gas containing hydrogen gas from a fuel containing hydrogen and an oxidiser containing oxygen,
- a reformate intake device (16) for introducing reformate gas into the exhaust pipe (7) at an intake point (18) upstream of the respective exhaust processing device (8, 9, 10, 53),
- at least one ignition element (52) arranged in the exhaust pipe (7) downstream of the intake point (18) and upstream of the respective exhaust processing device (8, 9, 10, 53) for igniting an ignitable reformate gas exhaust mixture,
- wherein the reform intake device (16) comprises a reformate pipe (17) through which the reformate gas can be introduced upstream of the at least one exhaust gas processing device (8, 9, 10, 53) into the exhaust pipe (7),
**characterised in that**
- the reformate intake device (16) comprises a reformate heat exchanger (19) which is incorporated into the reformate pipe (17),
- the at least one exhaust processing device is an NOX storage unit (8) for storing NOX contained in the engine exhaust and **in that** a bypass (54) is provided bypassing the NOX storage unit (8) on the exhaust side, wherein the intake point (18) assigned to the NOX storage unit (8) is arranged downstream of a branch point (55) at which the bypass (54) branches off from the exhaust pipe (7).

2. Combustion engine system according to claim 1,
**characterised in that**
an additional exhaust processing device is an oxidation catalyst (10c) arranged downstream of the NOX storage unit (8) and **in that** the bypass (54) also bypasses said oxidation catalyst (10c).

3. Combustion engine system according to claim 1 or 2
**characterised in that**
- as additional exhaust processing devices a particle filter (9) is provided and downstream of the latter an SCR catalyst (53) is provided,
- three exhaust processing devices designed as oxidation catalysts (10) are provided, namely an oxidation catalyst (10a) arranged close to the engine between the combustion engine (2) and the particle filter (9), an oxidation catalyst (10b) remote from the engine arranged downstream of the SCR catalyst (53) and a middle oxidation catalyst (10c) arranged between the NOX storage unit (8) and the SCR catalyst (53),
- the bypass (54) bypasses the NOX storage unit (8) and the middle oxidation catalyst (10c) and leads upstream of the SCR catalyst (53) back into the exhaust pipe (7).

4. Combustion engine system according to any of the preceding claims,
**characterised in that**
the reformate heat exchanger (19) is incorporated into a cooling circuit (20) of the internal combustion engine (2) in order to couple the reformate pipe (17) to the cooling circuit (20) by means of heat exchange.

5. Combustion engine system according to any of claims 1 to 4,
**characterised in that**
- a fuel tank (5) is provided for storing the fuel,
- a fuel pipe (3) for supplying the combustion engine (2) with fuel is connected to the fuel tank (5),
- a fuel pipe (12) for supplying the reformer (11) with the combustible used as the fuel is connected to the fuel tank (5).

6. Combustion engine system according to any of claims 1 to 5,
**characterised in that**
the reformate intake device (16) comprises a reformate conveying device (21) which is arranged in the reformate pipe (17), in particular downstream of the reformate heat exchanger (19).

7. Combustion engine system according to any of claims 1 to 6,
**characterised in that**
the reformate intake device (16) comprises a reformate storage unit (43) with a valve device (42) which is connected to the reformate pipe (17).

8. Combustion engine system according to any of claims 1 to 7,
**characterised in that**
an additional exhaust processing device is a particle filter (9) for storing particles contained in the engine exhaust or an oxidation catalyst (10) for converting hydrocarbons contained in the engine exhaust and carbon monoxide or an SCR catalyst (53) for the selective catalytic reduction of nitrogen oxides with ammonia.

9. Combustion engine system according to any of the preceding claims,
**characterised in that**
a control (22) is provided coupled to the internal combustion engine (2) or an engine control (24) and to the reformate intake device (16), which control is designed so that
- for regenerating the NOX storage unit (8) during the stoichiometric or substoichiometric operation of the internal combustion engine (2) it controls the reformate intake device (16) for introducing reformate gas into the exhaust pipe (7) upstream of the NOX storage unit (8), and/or
- for heating the NOX storage unit (8) during the hyperstoichiometric operation of the internal combustion engine (2) it controls the reformate unit device (16) for introducing reformate gas into the exhaust pipe (7) upstream of the NOX storage unit (8).

10. Combustion engine system according to claims 8 and 9,
**characterised in that**
the control (22) is also designed so that
- for regenerating the particle filter (9) during the hyperstoichiometric operation of the internal combustion engine (2) it controls the reformate intake device (16) to introduce reformate gas into the exhaust pipe (7) upstream of the particle filter (9) and/or upstream of the oxidation catalyst (10), and/or
- for heating the oxidation catalyst (10) during the hyperstoichiometric operation of the internal combustion engine (2) it controls the reformate intake device (16) to introduce reformate gas into the exhaust pipe (7) upstream of the oxidation catalyst (10),
and/or
- for heating the SCR catalyst (53) during the hyperstoichiometric operation of the internal combustion engine (2) it controls the reformate intake device (16) to introduce reformate gas into the exhaust pipe (7) upstream of the SCR catalyst (53).

11. Combustion engine system according to any of claims 1 to 10,
**characterised in that**
at least one Lambda sensor (26) is provided assigned to the internal combustion engine (2) or the respective exhaust processing device (8, 9, 10, 53), which Lambda sensor can be coupled in particular to a control (22, 24, 51).

12. Combustion engine system according to any of claims 1 to 11,
**characterised in that**
the reformer (11) is a component of a fuel cell system (28), which in addition to the reformer (11) comprises at least one fuel cell (29) for generating electric current from an anode gas containing hydrogen gas formed by the reformate gas and a cathode gas containing oxygen gas.

13. Combustion engine system according to claim 12,
**characterised in that**
the fuel cell system (28) comprises a residual gas burner (37) for burning anode exhaust containing hydrogen gas with cathode exhaust containing oxygen gas.

14. Combustion engine system according to claim 13,
**characterised in that**
the fuel cell system (28) comprises at least one heat exchanger (40), which couples burner exhaust gas produced by the residual gas burner (37) with cathode gas to be supplied to the fuel cell (29) by means of heat exchange.

15. Combustion engine system according to any of claims 1 to 14,
**characterised in that**
at least one NOX sensor (27) is provided for detecting NOX in the exhaust, which is arranged on or in the exhaust pipe (7) of the internal combustion engine (2), wherein in particular the signals of the NOX sensor (27) can be taken into account in at least one control (22, 24, 51) for regeneration processes.

## Revendications

1. Système de moteur à combustion interne, en particulier dans un véhicule automobile, comprenant :
- un moteur à combustion interne (2) exploitable avec un carburant pour générer une puissance motrice,
- une conduite de gaz d'échappement (7) pour évacuer des gaz d'échappement du moteur,
- au moins un dispositif de traitement de gaz d'échappement (8, 9, 10, 53) agencé dans la conduite de gaz d'échappement (7), qui nécessite une température minimale pour démarrer et/ou pour fonctionner normalement et/ou pour se régénérer,
- un reformeur (11) pour générer du gaz de reformat contenant de l'hydrogène gazeux à partir d'un combustible contenant de l'hydrogène et d'un oxydant contenant de l'oxygène,
- un dispositif d'introduction de reformat (16) pour introduire du gaz de reformat dans la conduite de gaz d'échappement (7) en un point d'introduction (18) en amont du dispositif de traitement de gaz d'échappement respectif (8, 9, 10, 53),
- au moins un organe d'allumage (52) agencé dans la conduite de gaz d'échappement (7) en aval du point d'introduction (18) et en amont du dispositif de traitement de gaz d'échappement respectif (8, 9, 10, 53) pour allumer un mélange de gaz de reformat et de gaz d'échappement inflammable,
- dans lequel le dispositif d'introduction de reformat (16) présente une conduite de reformat (17) par lequel le gaz de reformat peut être introduit en amont du au moins un dispositif de traitement de gaz d'échappement (8, 9, 10, 53) dans la conduite de gaz d'échappement (7),
**caractérisé en ce que** :
- le dispositif d'introduction de reformat (16) présente un agent caloporteur de reformat (19) qui est incorporé à la conduite de reformat (17),
- le au moins un dispositif de traitement de gaz d'échappement est un réservoir de NOX (8) pour stocker du NOX contenu dans les gaz d'échappement du moteur et il est prévu une dérivation (54) contournant le réservoir de NOX (8) côté gaz d'échappement, dans lequel le point d'introduction (18) affecté au réservoir de NOX (8) est agencé en aval d'un point de dérivation (55) au niveau duquel la dérivation (54) dérive de la conduite de gaz d'échappement (7).

2. Système de moteur à combustion interne selon la revendication 1,
**caractérisé en ce que** :
un autre dispositif de traitement de gaz d'échappement est un catalyseur d'oxydation (10c) agencé en aval du réservoir de NOX (8) et la dérivation (54) contourne également ce catalyseur d'oxydation (10c).

3. Système de moteur à combustion interne selon la revendication 1 ou 2,
**caractérisé en ce que** :
- il est prévu comme autres dispositifs de traitement de gaz d'échappement un filtre à particules (9) et en aval de celui-ci un catalyseur SCR (53),
- il est prévu trois dispositifs de traitement de gaz d'échappement conçus sous la forme de catalyseurs d'oxydation (10), à savoir un catalyseur d'oxydation (10a) plus proche du moteur et agencé entre le moteur à combustion interne (2) et le filtre à particules (9), un catalyseur d'oxydation (10b) plus loin du moteur et agencé en aval du catalyseur SCR (53) et un catalyseur d'oxydation central (10c) agencé entre le réservoir de NOX (8) et le catalyseur SCR (53),
- la dérivation (54) contourne le réservoir de NOX (8) et le catalyseur d'oxydation central (10c) et débouche à nouveau dans la conduite de gaz d'échappement (7) en amont du catalyseur SCR (53).

4. Système de moteur à combustion interne selon l'une quelconque des revendications précédentes,
**caractérisé en ce que** :
l'agent caloporteur de reformat (19) est incorporé à un circuit de refroidissement (20) du moteur à combustion interne (2) afin de coupler la conduite de reformat (17) au circuit de refroidissement (20) avec transmission de chaleur.

5. Système de moteur à combustion interne selon l'une quelconque des revendications 1 à 4,
**caractérisé en ce que** :
- un réservoir de carburant (5) est prévu pour l'approvisionnement en carburant,
- une conduite de carburant (3) est raccordée au réservoir de carburant (5) pour alimenter le moteur à combustion interne (2) en carburant,
- une conduite de combustible (12) est raccordée au réservoir de carburant (5) pour alimenter le reformeur (11) en carburant servant de combustible.

6. Système de moteur à combustion interne selon l'une quelconque des revendications 1 à 5,
**caractérisé en ce que** :
le dispositif d'introduction de reformat (16) présente un dispositif de transport de reformat (21) qui est agencé dans la conduite de reformat (17), en particulier en aval de l'agent caloporteur de reformat (19).

7. Système de moteur à combustion interne selon l'une quelconque des revendications 1 à 6,
**caractérisé en ce que** :
le dispositif d'introduction de reformat (16) présente un réservoir de reformat (43) avec un dispositif à soupape (42) qui est raccordé à la conduite de reformat (17).

8. Système de moteur à combustion interne selon l'une quelconque des revendications 1 à 7,
**caractérisé en ce que** :
un autre dispositif de traitement de gaz d'échappement est un filtre à particules (9) pour stocker des particules contenues dans le gaz d'échappement du moteur ou un catalyseur d'oxydation (10) pour convertir des hydrocarbures et du monoxyde de carbone contenus dans les gaz d'échappement du moteur ou un catalyseur SCR (53) pour une réduction catalytique sélective d'oxydes d'azote avec de l'ammoniac.

9. Système de moteur à combustion interne selon l'une quelconque des revendications précédentes,
**caractérisé en ce que** :
il est prévu une commande (22) couplée au moteur à combustion interne (2) ou à une commande de moteur (24) ainsi qu'au dispositif d'introduction de reformat (16), qui est conçue de manière à :
- commander, pour régénérer le réservoir de NOX (8) au cours d'un fonctionnement stoechiométrique ou sous-stoechiométrique du moteur à combustion interne (2), le dispositif d'introduction de reformat (16) pour introduire du gaz de reformat dans la conduite de gaz d'échappement (7) en amont du réservoir de NOX (8), et/ou
- commander, pour chauffer le réservoir de NOX (8) au cours d'un fonctionnement sur-stoechiométrique du moteur à combustion interne (2), le dispositif d'introduction de reformat (16) pour introduire du gaz de reformat dans la conduite de gaz d'échappement (7) en amont du réservoir de NOX (8).

10. Système de moteur à combustion interne selon les revendications 8 et 9,
**caractérisé en ce que** :
la commande (22) est conçue en outre de manière à :
- commander, pour régénérer le filtre à particules (9) au cours d'un fonctionnement sur-stoechiométrique du moteur à combustion interne (2), le dispositif d'introduction de reformat (16) pour introduire du gaz de reformat dans la conduite de gaz d'échappement (7) en amont du filtre à particules (9) et/ou en amont du catalyseur d'oxydation (10), et/ou
- commander, pour chauffer le catalyseur d'oxydation (10) au cours d'un fonctionnement sur-stoechiométrique du moteur à combustion interne (2), le dispositif d'introduction de reformat (16) pour introduire du gaz de reformat dans la conduite de gaz d'échappement (7) en amont du catalyseur d'oxydation (10), et/ou
- commander, pour chauffer le catalyseur SCR (53) au cours d'un fonctionnement sur-stoïchiométrique du moteur à combustion interne (2), le dispositif d'introduction de reformat (16) pour introduire du gaz de reformat dans la conduite de gaz d'échappement (7) en amont du catalyseur SCR (53).

11. Système de moteur à combustion interne selon l'une quelconque des revendications 1 à 10,
**caractérisé en ce que** :
il est prévu au moins une sonde lambda (26) affectée au moteur à combustion interne (2) ou au dispositif de traitement de gaz d'échappement respectif (8, 9, 10, 53), qui peut être couplée en particulier à une commande (22, 24, 51).

12. Système de moteur à combustion interne selon l'une quelconque des revendications 1 à 11,
**caractérisé en ce que** :
le reformeur (11) fait partie d'un système de piles à combustible (28) qui présente à côté du reformeur (11) au moins une pile à combustible (29) pour générer du courant électrique venant d'un gaz anodique contenant de l'hydrogène gazeux formé par le gaz de reformat et d'un gaz cathodique contenant de l'oxygène gazeux.

13. Système de moteur à combustion interne selon la revendication 12,
**caractérisé en ce que** :
le système de piles à combustible (28) présente un brûleur de gaz résiduaire (37) pour brûler du gaz d'échappement anodique contenant de l'hydrogène gazeux avec du gaz d'échappement cathodique contenant de l'oxygène gazeux.

14. Système de moteur à combustion interne selon la revendication 13,
**caractérisé en ce que** :
le système de piles à combustible (28) présente au moins un agent caloporteur (40) qui couple du gaz d'échappement de brûleur produit par le brûleur de gaz résiduaire (37) à du gaz cathodique alimentant la pile à combustible (29) avec transmission de chaleur.

15. Système de moteur à combustion interne selon l'une quelconque des revendications 1 à 14,
**caractérisé en ce que** :
il est prévu au moins une sonde de NOX (27) pour détecter le NOX dans les gaz d'échappement, qui est agencée sur ou dans la conduite de gaz d'échappement (7) du moteur à combustion interne (2), dans lequel il peut être prévu en particulier de tenir compte des signaux de la sonde de NOX (27) dans au moins une commande (22, 24, 51) pour des opérations de régénération.
